Europäisches Patentamt

European Patent Office

Office européen des brevets

(19)

(11) Veröffentlichungsnummer: **0 094 624**
A2

(12) **EUROPÄISCHE PATENTANMELDUNG**

(21) Anmeldenummer: **83104675.0**

(22) Anmeldetag: **11.05.83**

(51) Int. Cl.³: **H 04 L 25/49**

(30) Priorität: **14.05.82 DE 3218318**

(43) Veröffentlichungstag der Anmeldung:
**23.11.83 Patentblatt 83/47**

(84) Benannte Vertragsstaaten:
**AT BE CH DE FR GB IT LI LU NL SE**

(71) Anmelder: **SIEMENS AKTIENGESELLSCHAFT**
**Berlin und München Wittelsbacherplatz 2**
**D-8000 München 2(DE)**

(72) Erfinder: **Meyer, Fritz, Dr.-Ing.**
**Wifostrasse 5**
**D-8034 Germering(DE)**

(54) **Anordnung zur Erzeugung quaternärer Signale.**

(57) Zur optimalen Ausnutzung von Übertragungsstrecken für digitale Signale können anstelle binärer Signale quaternäre Signale übertragen werden. Zur Fehlerverringerung werden quaternäre Signale bevorzugt mittels eines von acht möglichen einschrittigen Codes übertragen. Entsprechend der Erfindung wird eine universell verwendbare Anordnung vorgeschlagen, mit der jeder der acht einschrittigen Codes erzeugt werden kann. Die erfindungsgemäße Schaltungsanordnung enthält eingangsseitig zwei Differenzverstärkeranordnungen, die von nach Potenzen von 2 gestuften Strömen durchflossen werden. Die Anwendung der erfindungsgemäßen Anordnung erfolgt insbesondere in Zeitmultiplexsystemen mit hohen Übertragungsgeschwindigkeiten.

FIG2

Croydon Printing Company Ltd

EP 0 094 624 A2

SIEMENS AKTIENGESELLSCHAFT          Unser Zeichen:
Berlin und München                  VPA 82 P 1 3 9 8 E

## Anordnung zur Erzeugung quaternärer Signale

Die Erfindung betrifft eine Anordnung zur Erzeugung von quaternären Signalen aus jeweils zwei binären Signalen gleicher Bitrate und annähernd gleicher Phase mit zwei ausgangsseitig parallelgeschalteten Differenzverstärkeranordnungen, die von um den Faktor 2 gestuften Strömen durchflossen werden.

Eine Anordnung zur Erzeugung $2^n$-stufiger digitaler Signale aus n binären Signalen sehr hoher Bitrate ist aus der DE-AS 28 23 383 bekannt. Die dort beschriebene Anordnung enthält einen mittels zweier Multiemittertransistoren symmetrisch aufgebauten basisgekoppelten Differenzverstärker, wobei über, den einzelnen Emittern der Multiemittertransistoren vorgeschaltete Emitterfolgerstufen die binären Signale bzw. deren Komplementärwerte zugeführt werden. Unter Verwendung von Stromquellen mit nach Potenzen von 2 gestuften Strömen entsteht durch Addition eines ersten binären Signals mit einfacher Amplitude und eines zweiten binären Signals mit doppelter Amplitude ein vierstufiges Ausgangssignal.

Eine Weiterentwicklung dieser bekannten Schaltung im Hinblick auf die Verwendung in einer Sendestufe mit hoher Ausgangsleistung für mehrstufige digitale Signale mit sehr hoher Schrittgeschwindigkeit wird in der deutschen Patentanmeldung P 31 07 047.7 vorgeschlagen.

In diesen Fällen handelt es sich um die Erzeugung von quaternären Signalen im sogenannten Dualcode. Für die Umcodierung von zwei binären Signalen in ein quaternä-

Ah 1 Shy / 13.5.82

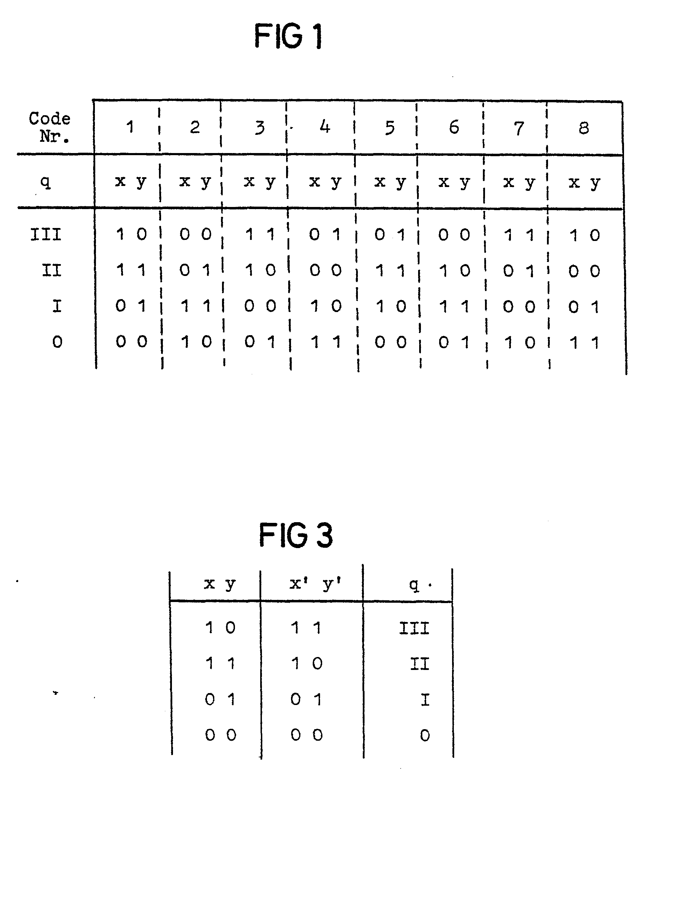

res Signal gibt es 24 Möglichkeiten, davon sind acht sogenannte einschrittige Codes, die in Fig. 1 dargestellt sind. Bei derartigen einschrittigen Codes, wie beispielsweise dem bekannten Gray-Code, ist die Zuordnung so gewählt, daß sich empfangsseitig nur ein Binärsignal ändert, wenn das quaternäre Signal bei der Übertragung um eine Amplitudenstufe verfälscht wird. Diese Möglichkeit zur Fehlerminimierung durch Wahl einer geeigneten Vorschrift für die Umcodierung ist besonders interessant bei der Übertragung quaternärer Signale mit hoher Schrittgeschwindigkeit, da in diesem Falle die empfangsseitige Erkennung der einzelnen Amplitudenstufen beispielsweise durch eine zusätzliche unerwünschte Phasenmodulation (Jitter) der übertragenen Signale besonders erschwert sein kann.

Ein Umcodierer, mit dem quaternäre digitale Signale hoher Schrittgeschwindigkeit in binäre Signale umgewandelt werden können, ist in der deutschen Patentanmeldung P 31 37 285.6 vorgeschlagen worden. Dieser Umcodierer enthält drei mit dem Eingangsanschluß verbundene Signalzweige, die jeweils eingangsseitig einen Differenzverstärker und daran angeschlossen ein getaktetes D-Flipflop enthalten. Während in einem Signalzweig eines der beiden binären Signale direkt erzeugt wird, werden die Ausgangssignale der beiden anderen Signalzweige so kombiniert, daß sich das andere binäre Signal ergibt. Dieser Umcodierer ist für die Umwandlung quaternärer digitaler Signale geeignet, die in einem beliebigen einschrittigen Code vorliegen können.

Der vorliegenden Erfindung liegt nun die Aufgabe zugrunde, eine Anordnung zur Erzeugung quaternärer digitaler Signale der eingangs erwähnten Art zu schaffen, mit der quaternäre Signale in einem beliebigen einschrittigen Code erzeugt werden können, wobei diese Anordnung auch für binäre Signale mit Schrittgeschwindigkeiten von einigen hundert Mbit/s verwendbar ist und leicht in integrierter Technik herstellbar sein soll.

Erfindungsgemäß wird die Aufgabe dadurch gelöst, daß zur Erzeugung von in einem einschrittigen Code vorliegenden quaternären Signalen ein Exklusiv-ODER-Glied vorgesehen ist, dessen Eingänge jeweils getrennt mit Quellen für die beiden binären Signale verbunden sind, daß der Ausgang des Exklusiv-ODER-Gliedes mit einem Eingang der ersten Differenzverstärkeranordnung verbunden ist und daß an einen Eingang des Exklusiv-ODER-Gliedes ein Eingang der zweiten Differenzverstärkeranordnung angeschlossen ist. Die erfindungsgemäße Anordnung benötigt in vorteilhafter Weise nur einen sehr geringen Aufwand.

Eine Weiterbildung der erfindungsgemäßen Anordnung ist dadurch gekennzeichnet, daß wenigstens einem der Eingänge des Exklusiv-ODER-Gliedes eine Inverterstufe vorgeschaltet ist.

Weitere Möglichkeiten für die universelle Anwendbarkeit der erfindungsgemäßen Anordnung ergeben sich dadurch, daß zur Erzeugung anderer Zuordnungen zwischen den binären Signalen und dem quaternären Signal die Verbindungen zwischen den beiden Quellen und den Eingängen des Exklusiv-ODER-Gliedes vertauscht sind.

Bei sehr hohen Signalgeschwindigkeiten kann die Signallaufzeit durch das Exklusiv-ODER-Glied und gegebenenfalls eine Inverterstufe in der Größenordnung der Bitdauer der binären Signale liegen. Für diesen Fall ist eine Weiterbildung der erfindungsgemäßen Anordnung zweckmäßig, bei der dem Eingang der zweiten Differenzverstärkeranordnung ein Laufzeitglied vorgeschaltet ist, durch das die Laufzeit der Signale bis zu den beiden Eingängen der Differenzverstärkeranordnungen aneinander angeglichen wird.

Bei hohen Signalgeschwindigkeiten und/oder bei binären Signalen mit hohem Jitteranteil ist eine Variante der erfindungsgemäßen Anordnung zweckmäßig, bei der in die Verbindung zwischen dem Ausgang des Exklusiv-ODER-Gliedes und dem ersten Eingang der ersten Differenzverstärkeranordnung ein erstes D-Flipflop so eingeschaltet ist, daß der Ausgang des Exklusiv-ODER-Gliedes mit dem D-Eingang des ersten D-Flipflops und dessen nichtinvertierender Ausgang mit dem ersten Eingang der ersten Differenzverstärkeranordnung verbunden ist, daß in die Verbindung zwischen dem Laufzeitglied und dem ersten Eingang der zweiten Differenzverstärkeranordnung ein zweites D-Flipflop so eingeschaltet ist, daß der Ausgang des Laufzeitgliedes mit dem D-Eingang des zweiten D-Flipflops und dessen nichtinvertierender Ausgang mit dem ersten Eingang der zweiten Differenzverstärkeranordnung verbunden ist und daß die beiden D-Flipflops mit dem Bittakt der binären Signale getaktet sind.

Zur Erhöhung der Ausgangsleistung, beispielsweise bei Verwendung der erfindungsgemäßen Anordnung in einer Sendestufe, ist eine Weiterbildung der vorgenannten Lösung zweckmäßig, bei der der invertierende Ausgang des ersten D-Flipflops mit dem zweiten Eingang der ersten Differenzverstärkeranordnung und der invertierende Ausgang des zweiten D-Flipflops mit dem zweiten Eingang der zweiten Differenzverstärkeranordnung verbunden sind.

Die Erfindung soll im einzelnen anhand der dargestellten Ausführungsbeispiele in der Zeichnung näher erläutert werden. In der Zeichnung zeigt

Fig. 1  die Zuordnung von Binär- und Quaternärsignalen
für alle einschrittigen Codes,

Fig. 2  eine prinzipielle Schaltung für eine Anordnung
zum Umsetzen von binären in quaternäre Signale,

Fig. 3  die Zuordnung von in der Schaltungsanordnung
nach Fig. 2 auftretenden Signalen und

Fig. 4  eine detaillierte Schaltung für eine Anordnung
zur Umsetzung von binären in quaternäre Signale.

Einleitend wurde bereits der Gray-Code als Beispiel für
einen einschrittigen Code erläutert. Dieser Gray-Code
ist in der Fig. 1 als Code Nr. 1 dargestellt. Aus diesem Code Nr. 1 können alle anderen Code-Nummern 2 bis 8
abgeleitet werden. So entstehen die Codes Nr. 2, 3 und 4
durch Invertieren einer oder beider Signalwerte für
x, y. Durch Vertauschen der Signalwerte von x und y
können aus den Codes Nr. 1 bis 4 die Codes Nr. 5 bis 8
abgeleitet werden.

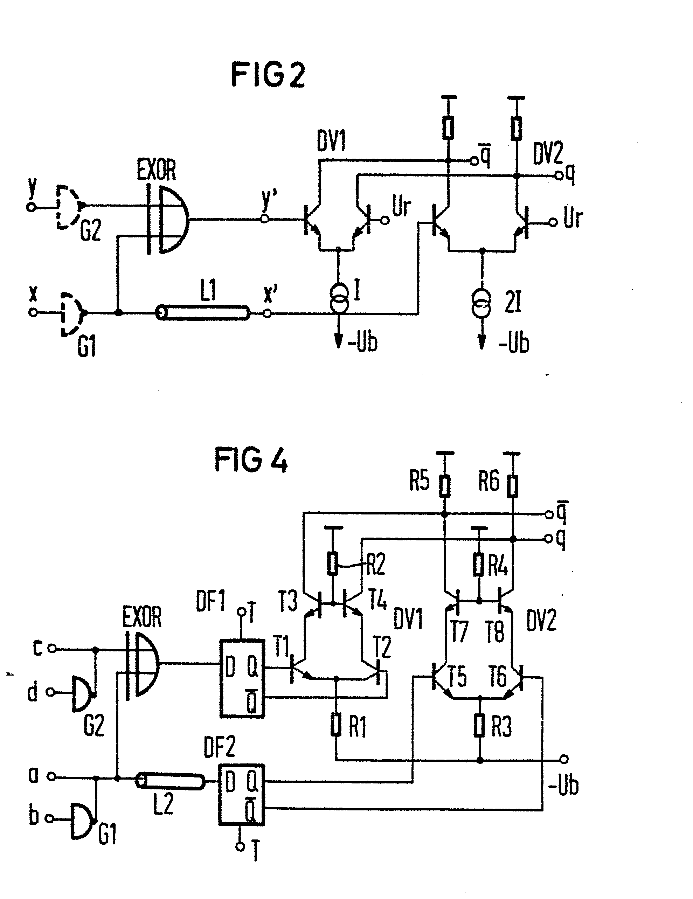

Die in der Fig. 1 dargestellten Zuordnungen zwischen
Binär- und Quaternärsignalen können mittels der im Prinzip dargestellten Schaltung nach der Fig. 2 realisiert
werden. Die Bezeichnungen für x und y sind dabei so eingetragen, daß sich ohne die gestrichelt eingezeichneten
Bauelemente eine Zuordnung entsprechend dem Gray-Code
ergibt. Die anderen Zuordnungen entsprechen der Fig. 1
und sind durch Vertauschen der Eingangsanschlüsse und
eventuell durch Verwendung wenigstens eines der beiden
mit den Eingangsanschlüssen jeweils getrennt verbundenen Inverters G1, G2 möglich. Die Inverter sind dabei
in die Verbindung zwischen den Eingangsanschlüssen der
Schaltung und den mit diesen verbundenen Eingangsanschlüssen eines Exklusiv-ODER-Gliedes EXOR eingeschaltet.

Mit dem Ausgang des Exklusiv-ODER-Gliedes ist der eine
Eingang einer ersten Differenzverstärkeranordnung DV1 verbunden, deren anderer Eingang an eine Referenzspannungsquelle Ur angeschlossen ist. Mit einem der beiden Eingänge des Exklusiv-ODER-Gliedes EXOR ist über ein erstes Verzögerungsglied L1 der eine Eingang einer zweiten Differenzverstärkeranordnung DV2 verbunden. Der andere Eingang dieser Differenzverstärkeranordnung ist mit der Quelle für die Referenzspannung verbunden. Ausgangsseitig sind die beiden Differenzverstärkeranordnungen DV1, DV2 stufenmäßig so miteinander verbunden, daß die Ausgänge der ersten Stufen der Differenzverstärkeranordnungen miteinander verbunden sind und ebenfalls die Ausgänge der zweiten Stufen. Als erste Stufen werden dabei diejenigen bezeichnet, denen die zu verknüpfenden Signale zugeführt werden, während die Eingänge der zweiten Stufen mit den Referenzspannungsquellen verbunden sind. Mit den zusammengeführten Stufenausgängen sind außerdem Ausgänge für die Signale q bzw. $\bar{q}$ verbunden, die die Ausgangssignale der Schaltungsanordnung nach der Fig. 2 darstellen.

Das Verzögerungsglied L1 gleicht die Signallaufzeit bis zu den beiden Signaleingängen der Differenzverstärkeranordnungen aneinander an. Damit ist dieses Verzögerungsglied erst bei hohen Signalübertragungsgeschwindigkeiten erforderlich, bei denen die Signallaufzeit durch das Exklusiv-ODER-Glied und gegebenenfalls den zweiten Inverter G2 einen wesentlichen Teil der Bitdauer der binären Signale ausmacht.

Zur Erläuterung der Funktion der Schaltungsanordnung nach der Fig. 2 ohne vorgeschaltete Inverter wird die Zuordnungstabelle nach der Fig. 3 herangezogen. In dieser Zuordnungstabelle sind mit x, y die Eingangssignale der gesamten Schaltungsanordnung, mit x', y' die Eingangssignale der Differenzverstärkeranordnungen und mit q, $\bar{q}$ die Ausgangssignale der Differenzverstärkeranordnungen bezeichnet. Es zeigt sich, daß, sofern die beiden Eingangssignale x, y dem logischen Nullpegel entsprechen, auch die Eingangssignale der Differenzverstärkeranordnungen und deren Ausgangssignal dem logischen Nullpegel entsprechen. Bleibt nun das Eingangssignal x auf dem logischen Nullpegel, während das Eingangssignal y den Einspegel annimmt, dann ist auch das Eingangssignal x' der zweiten Verstärkeranordnung DV2 auf dem logischen Nullpegel, während das Eingangssignal y' der ersten Verstärkeranordnung DV1 auf dem logischen Einspegel ist. Die Referenzspannungen der Differenzverstärkeranordnungen sind so gewählt, daß die Differenzverstärkeranordnungen bei Signalen entsprechend dem logischen Einspegel umschalten. Damit ergibt sich in diesem Falle ein Umschalten der ersten Differenzverstärkeranordnung und ein Ausgangssignal q, das dem logischen Pegel I des quaternären Signals entspricht.

Sind in einem weiteren Falle beide Eingangssignale x, y auf dem logischen Einspegel, dann ist auch das Eingangssignal x' der zweiten Differenzverstärkeranordnung auf dem logischen Einspegel, während durch die mod 2-Verknüpfung der beiden Eingangssignale x, y das Eingangssignal y' der ersten Differenzverstärkeranordnung DV1 auf dem logischen Nullpegel ist. Damit entspricht das Ausgangssignal der ersten Differenzverstärkeranordnung dem logischen Nullpegel, während das Ausgangssignal der zweiten Differenzverstärkeranordnung, die von dem doppelten Strom gegenüber der ersten Differenzverstärkeranordnung durchflossen wird, den Pegel II des quaternären Signals q annimmt.

In einem weiteren Schritt kann nun das Eingangssignal y den logischen Nullpegel annehmen, während das Eingangssignal x auf dem logischen Einspegel bleibt. Entsprechend ergeben sich für beide Eingangssignale x', y'
der Differenzverstärkeranordnungen die logischen Einspegel, beide Differenzverstärkeranordnungen werden damit eingeschaltet und es ergibt sich der maximale Ausgangspegel III des quaternären Signals q.

Die Schaltungsanordnung nach der Fig. 2 ist in der
Fig. 4 durch weitere Bauteile zu einer kompletten Schaltung ergänzt. Die Schaltung nach der Fig. 4 weist vier
Eingänge a, b, c, d auf, von denen die Eingänge a und c
unmittelbar mit jeweils einem zugeordneten Eingang des
Exklusiv-ODER-Gliedes EXOR verbunden sind. Der Eingang b
ist über den ersten Inverter G1 mit dem Eingang a verbunden, entsprechend ist der Eingang d über den zweiten Inverter G2 mit dem Eingang c verbunden. Durch Verbinden jeweils eines Einganges der Eingangspaare a, b
bzw. c, d mit einer der beiden Quellen für die binären
Signale x, y können sämtliche Zuordnungen entsprechend
der Tabelle nach Fig. 1 realisiert werden. Entsprechend
der Verwendung der Inverter können sich die Signallaufzeiten in den einzelnen Zweigen deutlich unterscheiden,
so daß für diesen Fall bei höheren Übertragungsgeschwindigkeiten ein umschaltbares Verzögerungsglied L2 vorgesehen ist.

Mit dem Ausgang des Exklusiv-ODER-Gliedes EXOR ist der
D-Eingang eines ersten D-Flipflops DF1 verbunden, entsprechend ist mit dem Ausgang des umschaltbaren Verzögerungsgliedes L2 der D-Eingang eines zweiten D-Flipflops DF2 verbunden. Die Takteingänge T der beiden
D-Flipflops sind mit einer nicht dargestellten Quelle
für den Bittakt der umzusetzenden binären Signale verbunden. Die beiden D-Flipflops führen eine zeitmäßige
Regenerierung der binären Signale durch, indem sie für
eine bestimmte Zeit diese binären Signale abtasten.
Außerdem werden durch die beiden D-Flipflops zu den binären Signalen jeweils deren inverse Signale erzeugt,
die an den $\overline{Q}$-Ausgängen der beiden D-Flipflops anstehen.
Den beiden D-Flipflops DF1, DF2 sind die beiden Differenzverstärkeranordnungen DV1, DV2 nachgeschaltet.

Die erste Differenzverstärkeranordnung DV1 enthält vier
npn-Transistoren T1...T4, von denen die beiden ersten
Transistoren T1 und T2 durch Verbindung ihrer Emitteranschlüsse miteinander und über einen ersten Widerstand
R1 mit Betriebsspannung -Ub einen ersten emittergekoppelten Differenzverstärker bilden. Die Ansteuerung dieses Differenzverstärkers erfolgt über die Transistorbasen, wobei der Basisanschluß des ersten Transistors
T1 mit dem nichtinvertierenden Ausgang Q des ersten
D-Flipflops DF1 und dessen invertierender Ausgang $\overline{Q}$ mit
dem Basisanschluß des zweiten Transistors T2 verbunden
ist.

Dem ersten emittergekoppelten Differenzverstärker ist
ein erster basisgekoppelter Differenzverstärker nachgeschaltet, der durch den dritten und den vierten Transistor T3, T4 sowie durch einen zweiten Widerstand R2
gebildet wird, der auf der einen Seite mit Bezugsspannung und auf der anderen Seite mit den Basisanschlüssen
des dritten und des vierten Transistors verbunden ist.
Zur Verbindung der beiden Differenzverstärker ist der
Emitteranschluß des dritten Transistors T3 mit dem
Kollektoranschluß des ersten Transistors T1 und der
Emitteranschluß des vierten Transistors T4 mit dem Kollektoranschluß des zweiten Transistors T2 verbunden.

Analog zur ersten Differenzverstärkeranordnung DV1 ist
die zweite Differenzverstärkeranordnung DV2 aufgebaut,
die einen fünften bis achten npn-Transistor T5...T8
enthält. Der emittergekoppelte Differenzverstärker dieser zweiten Differenzverstärkeranordnung wird durch die Transistoren T5 und T6 gebildet, deren Emitteranschlüsse wiederum miteinander und über einen dritten Widerstand R3 mit Betriebsspannung -Ub verbunden sind. Der Widerstandswert des dritten Widerstandes R3 ist dabei halb so groß wie der des ersten Widerstandes R1, so daß in die zweite Differenzverstärkeranordnung ein gegenüber der ersten verdoppelter Strom 2I eingeprägt wird. Mit dem Basisanschluß des fünften Transistors T5 ist der nichtinvertierende Ausgang Q des zweiten D-Flipflops DF2 verbunden, an dessen invertierenden Ausgang $\overline{Q}$ der Basisanschluß des sechsten Transistors T6 angeschlossen ist.

Der basisgekoppelte Differenzverstärker der zweiten Differenzverstärkeranordnung wird durch einen siebenten und einen achten Transistor T7, T8 gebildet, wobei die Basisanschlüsse der beiden Transistoren miteinander und über einen vierten Widerstand R4 mit Bezugspotential verbunden sind. Der Emitteranschluß des siebenten Transistors T7 ist mit dem Kollektoranschluß des fünften Transistors T5 und der Emitteranschluß des achten Transistors T8 ist mit dem Kollektoranschluß des sechsten Transistors T6 verbunden. Der Kollektoranschluß des siebenten Transistors T7 ist außerdem über einen fünften Widerstand R5 und der Kollektoranschluß des achten Transistors T8 ist über einen sechsten Widerstand R6 mit Bezugspotential verbunden. Außerdem ist der Kollektoranschluß des siebenten Transistors T7 mit dem Kollektoranschluß des dritten Transistors T3 und mit einem Anschluß für das inverse Ausgangssignal $\overline{q}$ verbunden, während der Kollektoranschluß des achten Transistors T8 zusätzlich mit dem Kollektoranschluß des vierten Transistors T4 und mit einem Anschluß für das Ausgangssignal q verbunden ist.

Die beiden Differenzverstärkeranordnungen DV1 und DV2 enthalten jeweils einen emittergekoppelten und einen basisgekoppelten Differenzverstärker, die hintereinandergeschaltet sind und jeweils im Gegentakt angesteuert werden. Durch diese Ansteuerungsart ergibt sich einerseits ein geringerer Bedarf an Steuerleistung, andererseits ist auch die Umschaltgeschwindigkeit höher, so daß derartige Anordnungen auch zur Verknüpfung von Signalen mit Bitraten von einigen hundert Mbit/s verwendet werden können. Durch die Gegentaktansteuerung kann in Verbindung mit entsprechenden Transistoren auch eine Sendestufe realisiert werden, wie sie beispielsweise für Zwischenverstärker in Übertragungssystemen für digitale Signale  benötigt wird. Werden zusätzlich die Eingänge a, b, c, d gesteuert umgeschaltet, dann kann auch eine gewisse Verschlüsselungswirkung erreicht werden.

6 Patentansprüche
4 Figuren

Patentansprüche

1. Anordnung zur Erzeugung von quaternären Signalen aus jeweils zwei binären Signalen gleicher Bitrate und gleicher Phase mit zwei ausgangsseitig parallelgeschalteten Differenzverstärkeranordnungen, die von um den Faktor 2 gestuften Strömen durchflossen werden, d a d u r c h   g e k e n n z e i c h n e t , daß zur Erzeugung von in einem einschrittigen Code vorliegenden quaternären Signalen ein Exklusiv-ODER-Glied (EXOR) vorgesehen ist, dessen Eingänge jeweils getrennt mit Quellen für die beiden binären Signale (x, y) verbunden sind, daß der Ausgang des Exklusiv-ODER-Gliedes (EXOR) mit einem Eingang der ersten Differenzverstärkeranordnung (DV1) verbunden ist und daß an einen Eingang des Exklusiv-ODER-Gliedes (EXOR) ein Eingang der zweiten Differenzverstärkeranordnung (DV2) angeschlossen ist.

2. Anordnung nach Patentanspruch 1, d a d u r c h   g e k e n n z e i c h n e t , daß wenigstens einem der Eingänge des Exklusiv-ODER-Gliedes (EXOR) eine Inverterstufe (G1, G2) vorgeschaltet ist.

3. Anordnung nach Patentansprüchen 1 oder 2, d a - d u r c h   g e k e n n z e i c h n e t , daß zur Erzeugung anderer Zuordnungen zwischen den binären Signalen und dem quaternären Signal die Verbindungen zwischen den beiden Quellen und den Eingängen des Exklusiv-ODER-Gliedes (EXOR) vertauscht sind.

4. Anordnung nach Patentansprüchen 1 bis 3, d a - d u r c h   g e k e n n z e i c h n e t , daß dem Eingang der zweiten Differenzverstärkeranordnung (DV2) ein Laufzeitglied (L) vorgeschaltet ist, durch das die Laufzeit der Signale bis zu den beiden Eingängen
der Differenzverstärkeranordnungen aneinander angeglichen wird.

5. Anordnung nach Patentansprüchen 1 bis 4, d a -
d u r c h   g e k e n n z e i c h n e t , daß in die
Verbindung zwischen dem Ausgang des Exklusiv-ODER-
Gliedes (EXOR) und dem ersten Eingang der ersten Differenzverstärkeranordnung (DV1) ein erstes D-Flipflop
(DF1) so eingeschaltet ist, daß der Ausgang des Exklusiv-ODER-Gliedes (EXOR) mit dem D-Eingang des ersten
D-Flipflops (Df1) und dessen nichtinvertierender Ausgang mit dem ersten Eingang der ersten Differenzverstärkeranordnung (DV1) verbunden ist, daß in die Verbindung zwischen dem Laufzeitglied (L) und dem ersten
Eingang der zweiten Differenzverstärkeranordnung (DV2)
ein zweites D-Flipflop (DF2) so eingeschaltet ist, daß
der Ausgang des Laufzeitgliedes (L) mit dem D-Eingang
des zweiten D-Flipflops (DF2) und dessen nichtinvertierender Ausgang (Q) mit dem ersten Eingang der zweiten
Differenzverstärkeranordnung (DV2) verbunden ist und
daß die beiden D-Flipflops (DF1, DF2) mit dem Bittakt
der binären Signale getaktet sind.

6. Anordnung nach Patentanspruch 5, d a d u r c h
g e k e n n z e i c h n e t , daß der invertierende
Ausgang ($\overline{Q}$) des ersten D-Flipflops (DF1) mit dem zweiten Eingang der ersten Differenzverstärkeranordnung
(DV1) und der invertierende Ausgang ($\overline{Q}$) des zweiten
D-Flipflops (DF2) mit dem zweiten Eingang der zweiten
Differenzverstärkeranordnung (DV2) verbunden sind.

## FIG 1

| Code Nr. | 1 | 2 | 3 | 4 | 5 | 6 | 7 | 8 |
|---|---|---|---|---|---|---|---|---|
| q | x y | x y | x y | x y | x y | x y | x y | x y |
| III | 1 0 | 0 0 | 1 1 | 0 1 | 0 1 | 0 0 | 1 1 | 1 0 |
| II | 1 1 | 0 1 | 1 0 | 0 0 | 1 1 | 1 0 | 0 1 | 0 0 |
| I | 0 1 | 1 1 | 0 0 | 1 0 | 1 0 | 1 1 | 0 0 | 0 1 |
| 0 | 0 0 | 1 0 | 0 1 | 1 1 | 0 0 | 0 1 | 1 0 | 1 1 |

## FIG 3

| x y | x' y' | q . |
|---|---|---|
| 1 0 | 1 1 | III |
| 1 1 | 1 0 | II |
| 0 1 | 0 1 | I |
| 0 0 | 0 0 | 0 |

# FIG 2

# FIG 4